# FASCICULE DE BREVET EUROPEEN

(11) **EP 2 384 276 B1**
(45) Date de publication et mention de la délivrance du brevet: **28.08.2013**
(21) Numéro de dépôt: 09805763.1
(22) Date de dépôt: 21.12.2009
(51) Int. Cl.: B29D 30/06, B22D 19/06

(54) **MOULE POUR LA VULCANISATION D'UN PNEUMATIQUE COMPRENANT UN RESEAU DE CANAUX ET D'ENTAILLES**
EINE ANORDNUNG AUS NUTEN UND KERBEN ENTHALTENDE REIFENVULKANISIERUNGSFORM
TYRE-VULCANISING MOULD INCLUDING AN ARRAY OF GROOVES AND NOTCHES

(30) Priorité: 31.12.2008 FR 0859165
(43) Date de publication de la demande: 09.11.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: MONTBEL, Michel, F-63190 Orleat (FR); LAUWERS, Olivier, F-63270 YRONDE et BURON (FR)
(74) Mandataire: Lasson, Cédric Y. M.
(86) Numéro de dépôt international: PCT/FR2009/052637
(87) Numéro de publication internationale: WO 2010/076521

(56) Documents cités:
- EP-A- 1 782 970
- EP-A- 1 872 975
- EP-A2- 1 588 830
- JP-A- 8 025 361
- JP-A- 2003 080 360
- JP-A- 2005 193 770
- US-A- 2 121 955
- US-A- 3 570 571
- US-B1- 6 264 453

## Description

La présente invention concerne le domaine technique des pneumatiques.

Dans ce qui suit, on appelle axe d'un pneumatique son axe de révolution. Cet axe définit également une direction axiale du moule en considérant le pneumatique dans le moule. La direction perpendiculaire à l'axe de révolution est désignée sous le nom de direction radiale et la direction circonférentielle décrit la circonférence du pneumatique dans un plan perpendiculaire à la direction axiale.

Pour la compréhension de ce qui suit, on désignera sous le vocable de garniture finale la pièce ayant la forme définitive du moule destiné à donner sa forme au pneumatique. La garniture finale a donc la forme en négatif du pneumatique final.

Un pneumatique comprend généralement une bande de roulement de révolution autour de l'axe du pneumatique. Le pneumatique est vulcanisé dans un moule comprenant une ou plusieurs garnitures finales de moulage réparties circonférentiellement autour de l'axe.

On connaît du document EP 1 872 975, une garniture finale de moule comprenant un couple de lamelles d'une seule pièce, permettant le moulage d'un couple d'entailles dans la bande de roulement. Chaque lamelle sépare deux pains de gomme et porte des saillies de moulage de reliefs dans chacun des pains de gomme. Une de ces lamelles porte également un cordon creux de moulage d'un canal dans la bande de roulement.

Les reliefs et le canal permettent notamment de limiter la perte d'adhérence du pneumatique lors de l'usure de la bande de roulement. En effet, l'usure de la gomme de la bande de roulement provoque l'affleurement des reliefs et du canal à la surface de la bande de roulement. Les reliefs et le canal affleurants forment des sculptures susceptibles de remplacer au moins partiellement les sculptures initiales de la bande de roulement arasées par l'usure.

En outre, les reliefs et le canal présentent des formes complexes permettant de conférer des propriétés de performances élevées à la bande de roulement du pneumatique, notamment lors du freinage ou du roulage sur sol mouillé.

Toutefois, la garniture décrite dans le document EP 1 872 975 est relativement complexe à fabriquer du fait de la structure monobloc des lamelles.

Le document US 3570571 - A décrit une garniture de moule pour la vulcanisation d'un pneumatique, ladite garniture comprenant un réseau de lamelles de moulage d'entailles d'une bande de roulement du pneumatique et un cordon de moulage d'un canal de la bande de roulement, ledit cordon surmoulant un bord d'une lamelle.

L'invention a pour but de fournir une garniture de moule facile à fabriquer et permettant d'obtenir une bande de roulement présentant des propriétés de performance élevées.

A cet effet, l'invention a pour objet une garniture de moule pour la vulcanisation d'un pneumatique comme définie dans la revendication 1, la garniture comprenant au moins un réseau de cordons et de lamelles de moulage d'un réseau correspondant de canaux et d'entailles de la bande de roulement, le réseau de cordons et de lamelles comprenant au moins un noeud entre deux cordons, chaque cordon du réseau surmoulant au moins le bord d'une lamelle.

La garniture permet d'obtenir des propriétés de performance élevées. En effet, chaque cordon permet de mouler chaque canal qui confère, avec chaque entaille moulée à partir de la lamelle, des propriétés de performance élevées au pneumatique. En outre, la garniture est relativement simple à fabriquer. En effet, une simple étape de surmoulage du bord de la lamelle est suffisante pour fabriquer l'ensemble formé par le cordon et la lamelle. Le cordon et la lamelle pourront être réalisés dans des matériaux différents mais compatibles et présentant une bonne affinité. Le cordon est de préférence plein, ce qui permet d'éviter l'introduction de gomme dans le cordon comme cela est possible dans la garniture de l'état de la technique.

Par réseau, on comprendra un ensemble d'au moins deux cordons reliés l'un à l'autre au niveau d'un noeud. Le pneumatique moulé sur la garniture présente ainsi un réseau de canaux communiquant entre eux. Un tel réseau permet notamment une évacuation efficace des calories de la bande de roulement ainsi qu'une régénération des sculptures à mi-usure.

Selon des caractéristiques optionnelles de la garniture :
- Le réseau de cordons comprend au moins un cordon circonférentiel de moulage d'un canal circonférentiel de la bande de roulement.
- Le réseau de cordons comprend au moins un cordon transversal de moulage d'un canal transversal de la bande de roulement.
- Le réseau de cordons comprend au moins un cordon radial de moulage d'un canal radial de la bande de roulement.

L'invention a également pour objet un moule pour la vulcanisation d'une ébauche crue de pneumatique comprenant au moins une garniture de moulage telle que définie précédemment.

L'invention a encore pour objet un procédé comme défini dans la revendication 6, pour la fabrication d'une garniture, dite finale, de moulage d'une partie d'une bande de roulement d'un pneumatique, dans lequel on fabrique la garniture finale en surmoulant des bords d'un réseau de lamelles de moulage d'un réseau correspondant d'entailles dans la bande de roulement par un réseau de cordons de moulage d'un réseau correspondant de canaux dans la bande de roulement.

On désignera sous le vocable de matrice la pièce destinée à mouler une garniture du moule. La matrice a donc la forme en positif du pneumatique et la forme en négatif de la garniture. De même, comme on le verra par la suite, on distinguera les garnitures et les matrices finales de garnitures et de matrices intermédiaires.

Optionnellement, chaque lamelle est réalisée en acier et chaque cordon est réalisé en aluminium.

Selon une caractéristique du procédé, on moule la garniture finale sur une matrice dite finale, la matrice finale comprenant :
- un réseau de canaux de moulage du réseau de cordons de la garniture finale,
   et
- le réseau de lamelles dont les bords débouchent dans le réseau de canaux de moulage du réseau de cordons de la garniture finale de sorte que lesdits bords du réseau de lamelles sont aptes à être surmoulés par le réseau de cordons de la garniture finale. Avantageusement, on réalise chaque cordon de la garniture finale dans un matériau présentant de bonnes caractéristiques thermiques tel que l'aluminium.

Optionnellement, on réalise la matrice finale dans un matériau inerte vis-à-vis du matériau dans lequel on moule le réseau de cordons de la garniture finale, par exemple dans un matériau comprenant du sable et/ou du plâtre.

L'utilisation d'un matériau comprenant du sable ou du plâtre pour la réalisation de la matrice finale permet de démouler facilement la garniture finale. En effet, un tel matériau est facilement fragmentable et est, de plus, peu coûteux et recyclable.

Selon une autre caractéristique optionnelle du procédé, préalablement au moulage de la garniture finale sur la matrice finale, on fabrique la matrice finale de la manière suivante :
- on fabrique une garniture intermédiaire, et
- on moule la matrice finale sur la garniture intermédiaire.

De façon optionnelle, la garniture intermédiaire comprend :
- au moins un réseau amovible intermédiaire moulé dans un contre-moule, ledit réseau comprenant un réseau de cordons intermédiaires de moulage du réseau de canaux de la matrice finale surmoulé sur les bords du réseau de lamelles de la garniture finale, et
- une embase comportant au moins un logement de positionnement du réseau amovible intermédiaire.

On fabrique l'embase de la garniture intermédiaire au moyen d'une matrice intermédiaire. Cette embase est généralement réalisée dans un matériau à mémoire de forme tel qu'un matériau à base de silicone. De préférence, la matrice intermédiaire est réalisée directement par prototypage rapide ou dans un matériau facilement usinable tel qu'une matière plastique.

Avantageusement, on moule le réseau de cordons intermédiaires du réseau amovible intermédiaire dans un matériau fusible, par exemple de la cire. Le réseau amovible intermédiaire est de préférence inséré dans la garniture intermédiaire.

Par matériau fusible, on entend notamment un matériau présentant une transition de phase solide-liquide. L'utilisation de cire permet de mouler chaque cordon intermédiaire dans un matériau facilement moulable et réutilisable.

Selon une autre caractéristique optionnelle du procédé, le contre-moule comprend :
- un réseau de canaux intermédiaires de moulage du réseau de cordons intermédiaires du réseau amovible intermédiaire, et
- des logements de positionnement du réseau de lamelles de la garniture finale, chaque logement débouchant dans un canal intermédiaire.

Le contre-moule est généralement formé de plusieurs pièces coopérant les unes avec les autres et réalisées à l'aide d'un matériau de type matière plastique ou d'un matériau à mémoire de forme tel que du silicone en passant par un moule modèle. Avantageusement, on fait fondre le réseau de cordons intermédiaires,
- après le moulage de la matrice finale sur la garniture intermédiaire, et
- avant le moulage de la garniture finale sur la matrice finale.

En faisant fondre chaque cordon intermédiaire après le moulage de la matrice finale sur la garniture intermédiaire, on crée, dans la matrice finale, les canaux de moulage des cordons de la garniture finale.

L'invention a également pour objet un contre-moule de moulage d'un réseau de cordons et de lamelles d'une garniture de moulage d'une partie d'une bande de roulement d'un pneumatique comme défini dans la revendication 15, le contre-moule comprenant :
- un réseau de canaux de moulage d'un réseau de cordons, et
- des logements de positionnement du réseau de lamelles par rapport au réseau de canaux et débouchant dans au moins un des canaux.

L'invention a enfin pour objet un procédé de vulcanisation d'une ébauche crue de pneumatique, dans lequel on vulcanise l'ébauche crue dans un moule tel que défini ci-dessus. Des formes avantageuses de l'invention sont définies dans les revendications dépendantes.

L'invention sera mieux comprise à la lecture de la description qui va suivre, donnée uniquement à titre d'exemple non limitatif et faite en se référant aux dessins dans lesquels:
- la figure 1 est une vue en perspective d'une partie d'une bande de roulement d'un pneumatique selon l'invention ;
- la figure 2 est une vue en transparence de la partie de bande de roulement du pneumatique de la figure 1;
- la figure 3 est une vue en perspective d'une garniture finale selon l'invention comprenant des premier et deuxième réseaux de cordons et de lamelles permettant de fabriquer le pneumatique de la figure 1;
- la figure 4 est une vue isolée en perspective d'une partie du premier réseau de la figure 3 ;
- les figures 5 et 6 sont des vues en perspective d'un contre-moule selon l'invention ;
- les figures 7 et 8 sont des vues en perspective d'exemples de réseaux amovibles intermédiaires moulés à partir de contre-moules tels qu'illustrés sur les figures 5 et 6;
- la figure 9 est une vue en perspective d'une garniture intermédiaire comprenant des réseaux amovibles intermédiaires du type de ceux illustrés par les figures 7 et 8;
- les figures 10 et 11 sont des vues en perspective d'une matrice finale moulée sur la garniture intermédiaire de la figure 9 respectivement avant et après fusion de cordons intermédiaires.

Sur les figures, on a représenté des axes X, Y, Z orthogonaux entre eux correspondant aux orientations habituelles radiale (OZ), axiale (OY) et circonférentielle (OX) d'un pneumatique.

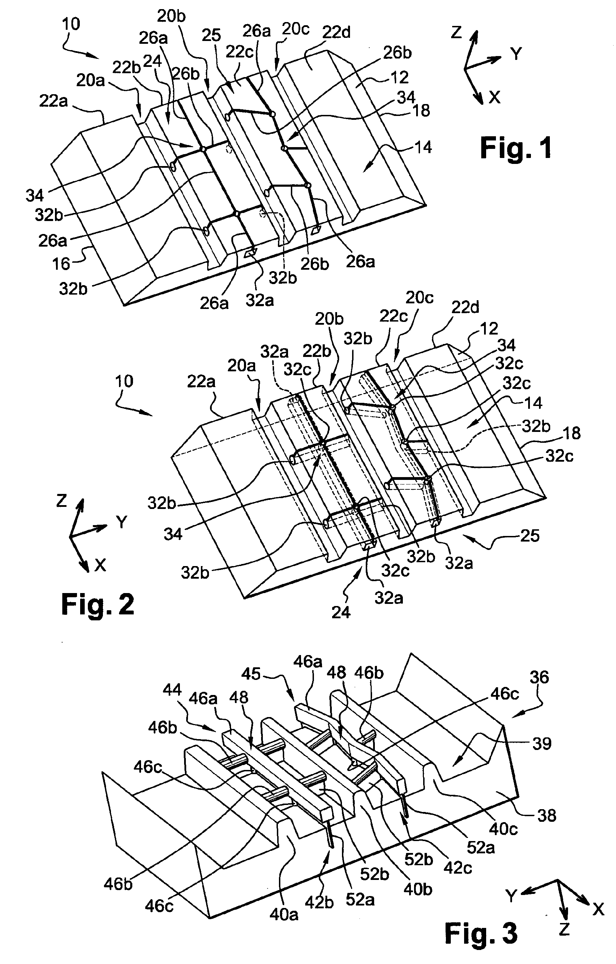

On a représenté sur les figures 1 et 2 un pneumatique selon l'invention désigné par la référence générale 10. Le pneumatique 10 a une forme générale de révolution autour de l'axe Y.

Le pneumatique 10 comprend une bande de roulement 12. La bande de roulement 12 comporte une surface externe 14 de roulement destinée à être au contact de la chaussée. La bande de roulement 12 est délimitée par deux épaules 16, 18. De plus, la bande de roulement 12 comporte des sillons 20a-c circonférentiels, ménagés dans la gomme de la bande de roulement 12. Les sillons 20a-c sont espacés axialement les uns des autres et répartis sur la dimension axiale de la bande de roulement 12.

Les épaules 16, 18 ainsi que les sillons 20a-c délimitent des bandes circonférentielles 22a-d de gomme. En l'espèce, la bande 22a est délimitée par l'épaule 16 et le sillon 20a, la bande 22b par les sillons 20a et 20b, la bande 22c par les sillons 20b et 20c, la bande 22d par le sillon 20c et l'épaule 18.

Chaque bande 22b, 22c comporte respectivement un réseau 24, 25 d'entailles 26a, 26b dont la profondeur est ici sensiblement égale à la hauteur radiale de chaque bande de gomme 22b, 22c. Chaque réseau d'entailles 24, 25 comporte également des canaux moulés 32a, 32b, 32c dans les bandes 22b, 22c. Chaque canal 32a-c présente une section transversale carrée, rectangulaire ou circulaire. En variante, la section pourra être quelconque.

Chaque canal 32a, dit circonférentiel, du réseau 24 s'étend circonférentiellement autour de l'axe Y et sensiblement parallèlement aux sillons 20a-c. Chaque canal 32a circonférentiel du réseau 25 s'étend circonférentiellement autour de l'axe Y en suivant une ligne gauche. Chaque canal 32a de chaque réseau 24, 25 est situé axialement respectivement entre les sillons 20a, 20b et 20b, 20c.

Chaque canal 32b, dit transversal, du réseau 24 présente une forme sensiblement rectiligne et s'étend axialement sensiblement parallèlement à l'axe Y. Chaque canal transversal 32b du réseau 25 présente une forme sensiblement rectiligne et s'étend selon une direction formant un angle non nul avec la direction axiale Y. Chaque canal 32b de chaque réseau 24, 25 s'étend depuis le canal circonférentiel 32a jusque dans les sillons 20a, 20b ou 20c dans lequel il débouche.

Chaque canal 32c, dit radial, de chaque réseau 24, 25 forme un puits s'étendant radialement depuis le canal circonférentiel 32a jusque sur la surface de roulement 14 sur laquelle il débouche. Chaque canal 32c est sensiblement rectiligne et s'étend sensiblement parallèlement à la direction radiale Z du pneumatique 10.

Chaque réseau 24, 25 comprend ainsi plusieurs noeuds 34. Chaque noeud 34 correspond à l'intersection d'au moins deux canaux moulés dans la bande de roulement 12. En l'espèce, chaque noeud 34 correspond à l'intersection du canal circonférentiel 32a, d'au moins un canal transversal 32b et d'un puits 32c.

Chaque entaille 26a débouche dans deux puits 32c successifs et le canal circonférentiel 32a. Chaque entaille 26a du réseau 24 présente une orientation générale circonférentielle, c'est-à-dire sensiblement perpendiculaire à l'axe Y. Chaque entaille 26a du réseau 25 présente une orientation générale sensiblement circonférentielle suivant une ligne gauche.

On a représenté sur la figure 3 une garniture 36, dite finale, selon l'invention d'un moule permettant de fabriquer le pneumatique 10 des figures 1 et 2. La garniture finale 36 ayant la forme d'un négatif du pneumatique 10 représenté sur les figures 1 et 2, la garniture finale 36 présente des caractéristiques qui se déduisent facilement de celles du pneumatique 10.

Les directions axiale, radiale et circonférentielle du moule correspondent respectivement aux directions axiale, radiale et circonférentielle du pneumatique 10 placé dans le moule.

La garniture 36 comprend une embase 38 portant une surface 39 de moulage de la surface de roulement 14 du pneumatique 10.

La garniture 36 comporte plusieurs cordons circulaires 40a-c espacés radialement et destinés respectivement au moulage des sillons 20a-c. Chaque cordon circulaire 40a-c s'étend radialement depuis la surface 39 sur une hauteur correspondant à la profondeur de chaque sillon 20a-c. Chaque cordon 40a-c s'étend circonférentiellement selon une direction sensiblement parallèle à la direction circonférentielle X du moule. Les cordons 40a, 40b délimitent une bande 42b de moulage de la bande 22b. Les cordons 40b, 40c délimitent une bande 42c de moulage de la bande 22c.

De plus, la garniture 36 comprend des réseaux 44, 45 de cordons 46a-c de moulage respectivement des réseaux 24, 25 des canaux 32a-c. Chaque cordon 46a-c présente, dans le cas d'espèce, une section transversale sensiblement carrée, rectangulaire ou circulaire. Chaque cordon 46a-c est réalisé en aluminium.

Chaque cordon 46a, dit circonférentiel, permet le moulage du canal circonférentiel 32a. Le cordon 46a du réseau 44 s'étend circonférentiellement autour de l'axe Y sensiblement parallèlement aux cordons 40a-c. Le cordon 46a du réseau 45 s'étend circonférentiellement autour de l'axe Y en suivant une ligne gauche. En l'espèce, chaque cordon 46a de chaque réseau 44, 45 est situé axialement respectivement entre les cordons 40a, 40b et 40b, 40c.

Chaque cordon 46b, dit transversal, permet le moulage d'un canal transversal 32b. En l'espèce, chaque cordon transversal 46b est rectiligne. Chaque cordon transversal 46b du réseau 44 s'étend axialement sensiblement parallèlement à l'axe Y. Chaque cordon transversal 46b du réseau 45 présente une forme sensiblement rectiligne et s'étend selon une direction formant un angle non nul avec la direction axiale Y. Chaque cordon 46b relie le cordon circonférentiel 46a correspondant et un des cordons 40a, 40b ou 40c.

Chaque cordon 46c, dit radial, de chaque réseau 44, 45 forme un plot reliant le cordon circonférentiel 46a et la surface de moulage 39. Chaque plot 46c permet le moulage d'un puits 32c, est sensiblement rectiligne et s'étend sensiblement parallèlement à la direction radiale Z du moule. Chaque réseau 44, 45 comprend ainsi plusieurs noeuds 48. Chaque noeud 48 correspond à l'intersection d'au moins deux cordons de la garniture 36. En l'espèce, chaque noeud 48 correspond à l'intersection du cordon circonférentiel 46a, d'au moins un cordon transversal 46b et d'un plot 46c.

Chaque réseau 44, 45 comprend également des lamelles métalliques 52a, 52b de moulage respectivement des réseaux 24, 25 d'entailles 26a, 26b. En l'espèce, les lamelles 52a, 52b sont réalisées en acier.

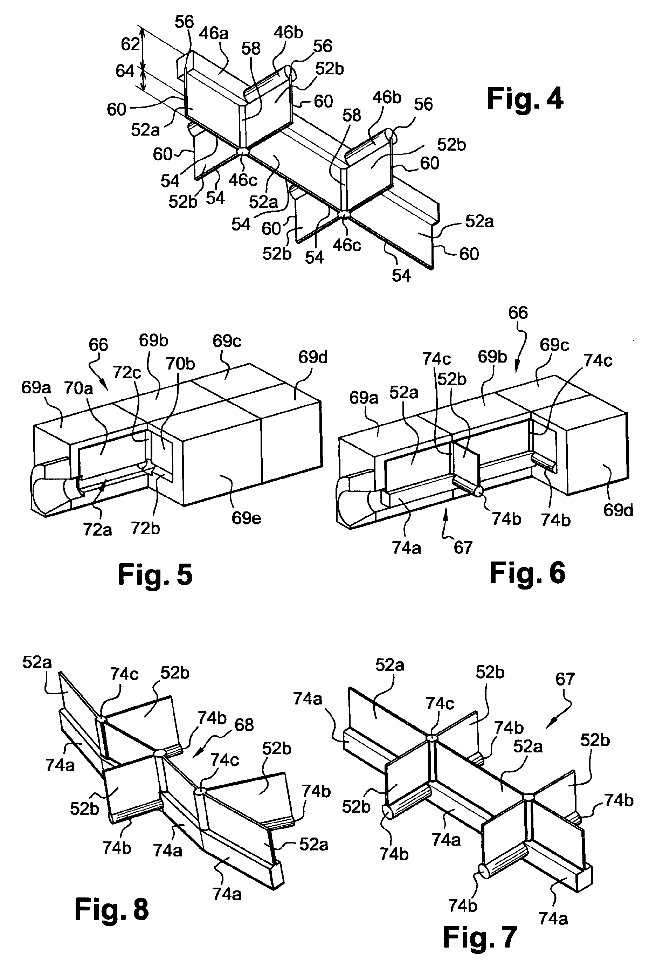

En référence à la figure 4 sur laquelle on a représenté une partie du réseau 44 isolée de l'embase 38, chaque lamelle 52a, 52b comporte deux bords 54, 56, dit longitudinaux, ainsi que deux bords 58, 60, dits radiaux. Chaque bord longitudinal 54 est surmoulé par l'embase 38 de façon à maintenir chaque lamelle 52a, 52b dans l'embase 38.

Chaque lamelle 52a, 52b présente une portion 62 s'étendant radialement sur une dimension destinée à délimiter la profondeur de chaque entaille 26a, 26b ainsi qu'une portion 64 s'étendant radialement sur une dimension destinée à délimiter la partie de la lamelle surmoulée dans l'embase 38.

Chaque bord radial 58, 60 de chaque lamelle 52a est surmoulée par un des plots 46c. Chaque bord longitudinal 56 de chaque lamelle 52a est surmoulé par le cordon circonférentiel 46a.

Chaque bord radial 58 de chaque lamelle 52b est surmoulé par un des plots 46c. Chaque bord longitudinal 56 de chaque lamelle 52b est surmoulé par un cordon transversal 46b. En outre, chaque bord 60 de chaque lamelle 52b est surmoulé par le cordon 40a-c correspondant.

La fabrication de la garniture 36 est possible en mettant en oeuvre un procédé selon l'invention dont on décrira ci-dessous les principales étapes en référence aux figures 5 à 11.

On a représenté sur les figures 5 et 6 un contre-moule 66. Pour des raisons de simplification de la description, le contre-moule 66 représenté sur les figures 5 et 6 permet d'obtenir un réseau amovible intermédiaire 67 (figure 7) présentant une forme sensiblement similaire au réseau 44 de la garniture finale 36 de la figure 3. On en déduira *mutatis mutandis* le contre-moule 66 permettant d'obtenir un réseau amovible intermédiaire 68 (figure 8) correspondant au réseau 45.

Le contre-moule 66 comprend six blocs séparables 69a-f. Chaque bloc 69a-f comporte un logement 70a de positionnement d'une lamelle circonférentielle 52a et un logement 70b de positionnement d'une lamelle transversale 52b. Le contre-moule 66 comprend également des canaux 72a-c, dits intermédiaires, de moulage des cordons intermédiaires 74a-c du réseau intermédiaire 67. En l'espèce, chaque bloc 69a-f comporte un quart de chaque canal 72a-c.

Chaque logement 70a débouche dans les canaux intermédiaires 72a, 72c et chaque logement 70b débouche dans les canaux intermédiaires 72b, 72c. On réalise les blocs 69a-f dans un matériau à mémoire de forme. En variante, on réalise les blocs 69a-f dans un matériau facilement usinable ou par prototypage rapide.

Puis, on moule le réseau amovible intermédiaire 67 dans le contre-moule 66. Le réseau amovible intermédiaire 67 comprend d'une part, les cordons intermédiaires 74a-c moulés à partir des canaux intermédiaires 72a-c et analogues aux cordons 46a-c et, d'autre part, les lamelles 52a, 52b. Chaque cordon intermédiaire 74a-c est surmoulé sur le bord 56, 58 de chaque lamelle 52a-b correspondante.

En l'espèce, on positionne chaque lamelle 52a, 52b dans chaque logement 70a-c. Dans une étape ultérieure, on ferme le contre-moule 66 en rapportant les blocs 69a-f les uns aux autres. Puis, on moule chaque cordon intermédiaire 74a-c dans un matériau fusible, en l'espèce thermo-fusible, par exemple de la cire. Après refroidissement, on sépare les blocs 69a-f amovibles de façon à extraire le réseau amovible intermédiaire 67 du contre-moule 66. Après une étape de reprise, notamment afin d'éliminer des résidus de moulage, on obtient alors le réseau intermédiaire 67 illustré à la figure 7. On a représenté le réseau intermédiaire 68 sur la figure 8.

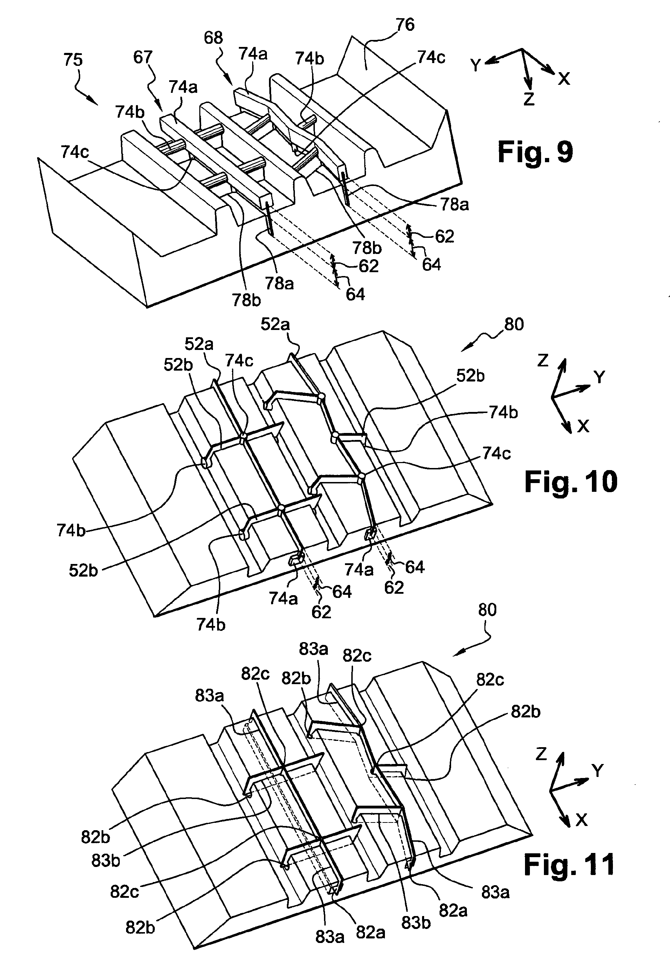

On a représenté sur la figure 9 une garniture intermédiaire 75. La garniture intermédiaire 75 comprend une embase 76 et les réseaux intermédiaires amovibles 67 et 68. On fabrique la garniture intermédiaire 75 en assemblant l'embase 76 et les réseaux 67, 68.

On réalise l'embase 76 à partir d'une matrice intermédiaire (non représentée) réalisée dans une matière plastique facilement usinable, L'embase 76 est réalisée à l'aide d'un matériau à mémoire de forme, en l'espèce en silastène, par moulage sur la matrice intermédiaire. L'embase 76 comprend des découpes 78a, 78b formant des logements de positionnement des réseaux 67, 68 par rapport à l'embase 76. En l'espèce, chaque découpe 78a permet le positionnement de la portion 64 de chaque lamelle 52a. Chaque découpe 78b permet le positionnement de la portion 64 de chaque lamelle 52b.

Puis, on moule une matrice finale 80 sur la garniture intermédiaire 75. En l'espèce, on réalise la matrice finale 80 dans un matériau inerte vis-à-vis du matériau dans lequel on moule les cordons 46a-c de la garniture finale 36. Ce matériau comprend de préférence du sable ou/et du plâtre.

On sépare alors l'embase 76 et la matrice finale 80 comme illustré à la figure 10. Les lamelles 52a, 52b sont ainsi transférées dans la matrice finale 80. En l'espèce, chaque portion 62 de chaque lamelle 52a, 52b est surmoulée par la matrice finale 80. Chaque portion 64 et chaque bord 60 est au contraire libre. Les cordons intermédiaires 74a-c en cire sont également emprisonnés dans la matrice finale 80.

Puis, on chauffe la matrice finale 80. Ainsi, on fait fondre chaque cordon 74a-c de la matrice finale 80. On obtient la matrice finale 80 représentée à la figure 11.

La matrice finale 80 comprend des canaux 82a-c de moulage respectivement des cordons 46a-c de la garniture finale 36 ainsi que des logements 83a-b de positionnement de chaque lamelle 52a-b. Chaque logement 83a-b débouche dans un des canaux 82a-c. La matrice finale 80 comprend également les lamelles 52a-b dont chaque bord 56, 58 débouche dans le canal 82a-c correspondant, de sorte que chaque bord 56, 58 est apte à être surmoulé par le cordon 46a-c de la garniture finale 36 correspondant.

Ensuite, on moule la garniture finale 36 sur la matrice finale 80. La garniture finale 36 est moulée dans un métal comprenant, en l'espèce, de l'aluminium. On remarque qu'on a fabriqué la matrice finale 36 en surmoulant le bord 56, 58 des lamelles 52a-b par un cordon 46a-c de moulage des canaux 32a-c.

On fragmente enfin la matrice finale 80 de façon à libérer la garniture finale 36.

La fabrication du pneumatique 10 est possible en mettant en oeuvre un procédé selon l'invention dont on décrira ci-dessous les principales étapes.

On positionne une ébauche crue du pneumatique 10 dans un moule comprenant plusieurs garnitures finales 36 du type de celles décrites ci-dessus, réparties circonférentiellement autour de l'axe Y du moule.

Après fermeture du moule, on vulcanise l'ébauche crue dans le moule par chauffage du moule.

Puis, on ouvre le moule et on retire le pneumatique 10 vulcanisé.

L'extraction des cordons 46a-c placés sur les lamelles 52a-b se fait par déplacement radial du moule à travers les entailles 26a-b formées par les lamelles 52a-b dans la bande de roulement 12.

A la lecture de ce qui précède, et sans se départir de l'esprit de l'invention, il est tout à fait possible de modifier la forme du réseau de canaux ainsi que la répartition des entailles dans la bande de roulement du pneumatique en fonction des contraintes imposées par les performances souhaitées du pneumatique.

Cet avantage permet d'élargir les possibilités de conception du pneumatique en réduisant les limites imposées par les procédés selon l'art antérieur. On notera qu'il est possible, sans sortir du cadre de l'invention, de fabriquer le réseau 44, 45 de la garniture finale 36 directement à partir du contre-moule 66 sans passer par les étapes de moulage de la garniture intermédiaire 75 et de la matrice finale 80.

## Revendications

1. Garniture (36) de moule pour la vulcanisation d'un pneumatique, **caractérisé en ce qu**'elle comprend au moins un réseau (44, 45) de cordons (46a, 46b, 46c) et de lamelles (52a, 52b) de moulage d'un réseau (24, 25) correspondant de canaux (32a, 32b, 32c) et d'entailles (26a, 26b) de la bande de roulement (12), le réseau (44, 45) de cordons (46a, 46b, 46c) et de lamelles (52a, 52b) comprenant au moins un noeud (34, 35) entre deux cordons (46a, 46b, 46c), chaque cordon (46a, 46b, 46c) du réseau (44, 45) surmoulant au moins le bord (56, 58) d'une lamelle (52a, 52b).

2. Garniture (36) selon la revendication 1, dans lequel le réseau (44, 45) de cordons (46a, 46b, 46c) comprend au moins un cordon (46a) circonférentiel de moulage d'un canal (32a) circonférentiel de la bande de roulement (12).

3. Garniture (36) selon l'une quelconque des revendications précédentes, dans lequel le réseau (44, 45) de cordons (46a, 46b, 46c) comprend au moins un cordon (46b) transversal de moulage d'un canal (32b) transversal de la bande de roulement (12).

4. Garniture (36) selon l'une quelconque des revendications précédentes, dans lequel le réseau (44, 45) de cordons (46a, 46b, 46c) comprend au moins un cordon (46c) radial de moulage d'un canal (32c) radial de la bande de roulement (12).

5. Moule pour la vulcanisation d'une ébauche crue de pneumatique (10) comprenant au moins une garniture (36) de moulage, **caractérisé en ce que** la garniture (36) de moulage est selon l'une quelconque des revendications précédentes.

6. Procédé de fabrication d'une garniture (36), dite finale, de moulage d'une partie d'une bande de roulement (12) d'un pneumatique (10), **caractérisé en ce qu**'on fabrique la garniture (36) finale en surmoulant des bords (56, 58) d'un réseau de lamelles (52a, 52b) de moulage d'un réseau correspondant d'entailles (26a, 26b) dans la bande de roulement (12) par un réseau de cordons (46a, 46b, 46c) de moulage d'un réseau correspondant de canaux (32a, 32b, 32c) dans la bande de roulement (12).

7. Procédé selon la revendication 6, dans lequel chaque lamelle (52a, 52b) est réalisée en acier et chaque cordon (46a, 46b, 46c) est réalisé en aluminium.

8. Procédé selon la revendication 6 ou 7, dans lequel on moule la garniture finale (36) sur une matrice (80) dite finale, la matrice finale (80) comprenant :
- un réseau de canaux (82a, 82b, 82c) de moulage du réseau de cordons (46a, 46b, 46c) de la garniture finale (36), et
- le réseau de lamelles (52a, 52b) dont les bords (56-58) débouchent dans le réseau de canaux de moulage (82a, 82b, 82c) du réseau de cordons de la garniture finale de sorte que lesdits bords (56-58) du réseau de lamelles (52a, 52b) sont aptes à être surmoulés par le réseau de cordons (46a, 46b, 46c) de la garniture finale (36).

9. Procédé selon la revendication 8, dans lequel on réalise la matrice finale (80) dans un matériau inerte vis-à-vis du matériau dans lequel on moule le réseau de cordons (46a, 46b, 46c) de la garniture finale (36), par exemple dans un matériau comprenant du sable et/ou du plâtre.

10. Procédé selon la revendication 8 ou 9, dans lequel, préalablement au moulage de la garniture (36) finale sur la matrice finale (80), on fabrique la matrice finale (80) de la manière suivante :
- on fabrique une garniture intermédiaire (75), et
- on moule la matrice finale (80) sur la garniture intermédiaire (75).

11. Procédé selon la revendication 10, dans lequel la garniture intermédiaire (75) comprend:
- au moins un réseau amovible (67, 68) intermédiaire moulé dans un contre-moule (66), ledit réseau (67, 68) comprenant un réseau de cordons intermédiaires (74a, 74b, 74c) de moulage du réseau de canaux (82a, 82b, 82c) de la matrice finale (80) surmoulé sur les bords (56, 58) du réseau de lamelles (52a, 52b), et
- une embase (76) comportant au moins un logement (78a, 78b) de positionnement du réseau amovible intermédiaire (67, 68).

12. Procédé selon la revendication 11, dans lequel on moule le réseau de cordons intermédiaires (74a, 74b, 74c) du réseau amovible intermédiaire (67, 68) dans un matériau fusible, par exemple de la cire.

13. Procédé selon la revendication 11 ou 12, dans lequel le contre-moule (66) comprend :
- un réseau de canaux intermédiaires (72a, 72b, 72c) de moulage du réseau de cordons intermédiaires (74a, 74b, 74c) du réseau amovible intermédiaire (67, 68), et
- des logements (70a, 70b, 70c) de positionnement du réseau de lamelles (52a, 52b) de la garniture finale (36), chaque logement (70a, 70b, 70c) débouchant dans un canal intermédiaire (72a, 72b, 72c).

14. Procédé selon l'une quelconque des revendications 11 à 13, dans lequel :
- après le moulage de la matrice finale (80) sur la garniture intermédiaire (75), et
- avant le moulage de la garniture (36) finale sur la matrice finale (80),
on fait fondre chaque cordon intermédiaire (74a, 74b, 74c).

15. Contre-moule (66) de moulage d'un réseau de cordons et de lamelles d'une garniture de moulage d'une partie d'une bande de roulement d'un pneumatique, **caractérisé en ce que** le contre-moule comprend :
- un réseau de canaux de moulage d'un réseau de cordons, et
- des logements de positionnement du réseau de lamelles (52a, 52b) par rapport au réseau de canaux et débouchant dans au moins un des canaux.

16. Procédé de vulcanisation d'une ébauche crue de pneumatique (10), **caractérisé en ce qu**'on vulcanise l'ébauche crue dans un moule selon la revendication 5.

17. Pneumatique (10), **caractérisé en ce qu**'il est obtenu par vulcanisation d'une ébauche crue dans un moule selon la revendication 5.

## Patentansprüche

1. Formeinsatz (36) zur Vulkanisierung eines Luftreifens, **dadurch gekennzeichnet, dass** er mindestens ein Netzwerk (44, 45) von Wülsten (46a, 46b, 46c) und Lamellen (52a, 52b) zum Formen eines entsprechenden Netzwerks (24, 25) von Kanälen (32a, 32b, 32c) und Einschnitten (26a, 26b) des Laufstreifens (12) enthält, wobei das Netzwerk (44, 45) von Wülsten (46a, 46b, 46c) und Lamellen (52a, 52b) mindestens einen Knoten (34, 35) zwischen zwei Wülsten (46a, 46b, 46c) enthält, wobei jeder Wulst (46a, 46b, 46c) des Netzwerks (44, 45) mindestens den Rand (56, 58) einer Lamelle (52a, 52b) überformt.

2. Einsatz (36) nach Anspruch 1, wobei das Netzwerk (44, 45) von Wülsten (46a, 46b, 46c) mindestens einen Umfangswulst (46a) zum Formen eines Umfangskanals (32a) des Laufstreifens (12) enthält.

3. Einsatz (36) nach einem der vorhergehenden Ansprüche, wobei das Netzwerk (44, 45) von Wülsten (46a, 46b, 46c) mindestens einen Querwulst (46b) zum Formen eines Querkanals (32b) des Laufstreifens (12) enthält.

4. Einsatz (36) nach einem der vorhergehenden Ansprüche, wobei das Netzwerk (44, 45) von Wülsten (46a, 46b, 46c) mindestens einen radialen Wulst (46c) zum Formen eines radialen Kanals (32c) des Laufstreifens (12) enthält.

5. Form zur Vulkanisierung eines Luftreifenrohlings (10), die mindestens einen Formgebungseinsatz (36) enthält, **dadurch gekennzeichnet, dass** der Formgebungseinsatz (36) nach einem der vorhergehenden Ansprüche ist.

6. Herstellungsverfahren eines sogenannten Endeinsatzes (36) zum Formen eines Teils eines Laufstreifens (12) eines Luftreifens (10), **dadurch gekennzeichnet, dass** der Endeinsatz (36) hergestellt wird, indem Ränder (56, 58) eines Netzwerks von Lamellen (52a, 52b) zum Formen eines entsprechenden Netzwerks von Einschnitten (26a, 26b) im Laufstreifen (12) durch ein Netzwerk von Wülsten (46a, 46b, 46c) zum Formen eines entsprechenden Netzwerks von Kanälen (32a, 32b, 32c) im Laufstreifen (12) überformt werden.

7. Verfahren nach Anspruch 6, wobei jede Lamelle (52a, 52b) aus Stahl und jeder Wulst (46a, 46b, 46c) aus Aluminium hergestellt wird.

8. Verfahren nach Anspruch 6 oder 7, wobei der Endeinsatz (36) auf einer so genannten Endmatrix (80) geformt wird, wobei die Endmatrix (80) enthält:
- ein Netzwerk von Kanälen (82a, 82b, 82c) zum Formen des Netzwerks von Wülsten (46a, 46b, 46c) des Endeinsatzes (36), und
- das Netzwerk von Lamellen (52a, 52b), deren Ränder (56-58) in das Netzwerk von Kanälen (82a, 82b, 82c) zum Formen des Netzwerks von Wülsten des Endeinsatzes münden, so dass die Ränder (56-58) des Netzwerks von Lamellen (52a, 52b) durch das Netzwerk von Wülsten (46a, 46b, 46c) des Endeinsatzes (36) überformt werden können.

9. Verfahren nach Anspruch 8, wobei die Endmatrix (80) aus einem Material hergestellt wird, das gegenüber dem Material inert ist, aus dem das Netzwerk von Wülsten (46a, 46b, 46c) des Endeinsatzes (36) hergestellt wird, zum Beispiel aus einem Material, das Sand und/oder Gips enthält.

10. Verfahren nach Anspruch 8 oder 9, wobei vor dem Formen des Endeinsatzes (36) auf der Endmatrix (80) die Endmatrix (80) folgendermaßen hergestellt wird:
- es wird ein Zwischeneinsatz (75) hergestellt,
und
- die Endmatrix (80) wird auf dem Zwischeneinsatz (75) geformt.

11. Verfahren nach Anspruch 10, wobei der Zwischeneinsatz (75) enthält:
- mindestens ein entfernbares Zwischennetzwerk (67, 68), das in einer Gegenform (66) geformt wird, wobei das Netzwerk (67, 68) ein Netzwerk von Zwischenwülsten (74a, 74b, 74c) zum Formen des Netzwerks von Kanälen (82a, 82b, 82c) der Endmatrix (80) enthält, das auf die Ränder (56, 58) des Netzwerks von Lamellen (52a, 52b) aufgeformt wird, und
- einen Sockel (76), der mindestens eine Aufnahme (78a, 78b) zur Positionierung des entfernbaren Zwischennetzwerks (67, 68) aufweist.

12. Verfahren nach Anspruch 11, wobei das Netzwerk von Zwischenwülsten (74a, 74b, 74c) des entfernbaren Zwischennetzwerks (67, 68) aus einem schmelzbaren Material, zum Beispiel Wachs, geformt wird.

13. Verfahren nach Anspruch 11 oder 12, wobei die Gegenform (66) enthält:
- ein Netzwerk von Zwischenkanälen (72a, 72b, 72c) zum Formen des Netzwerks von Zwischenwülsten (74a, 74b, 74c) des entfernbaren Zwischennetzwerks (67, 68), und
- Aufnahmen (70a, 70b, 70c) zur Positionierung des Netzwerks von Lamellen (52a, 52b) des Endeinsatzes (36), wobei jede Aufnahme (70a, 70b, 70c) in einen Zwischenkanal (72a, 72b, 72c) mündet.

14. Verfahren nach einem der Ansprüche 11 bis 13, wobei:
- nach dem Formen der Endmatrix (80) auf dem Zwischeneinsatz (75), und
- vor dem Formen des Endeinsatzes (36) auf der
Endmatrix (80)
jeder Zwischenwulst (74a, 74b, 74c) geschmolzen wird.

15. Gegenform (66) zum Formen eines Netzwerks von Wülsten und Lamellen eines Einsatzes zum Formen eines Teils eines Laufstreifens eines Luftreifens, **dadurch gekennzeichnet, dass** die Gegenform enthält:
- ein Netzwerk von Kanälen zum Formen eines Netzwerks von Wülsten, und
- Aufnahmen zur Positionierung des Netzwerks von Lamellen (52a, 52b) bezüglich des Netzwerks von Kanälen und in mindestens einen der Kanäle mündend.

16. Verfahren zur Vulkanisierung eines Luftreifenrohlings (10), **dadurch gekennzeichnet, dass** der Rohling in einer Form nach Anspruch 5 vulkanisiert wird.

17. Luftreifen (10), **dadurch gekennzeichnet, dass** er durch Vulkanisierung eines Rohlings in einer erfindungsgemäßen Form nach Anspruch 5 erhalten wird.

## Claims

1. Lining (36) for a mould for vulcanizing a tyre, **characterized in that** it comprises at least one array or network (44, 45) of strips (46a, 46b, 46c) and of sipe blades (52a, 52b) for moulding a corresponding network (24, 25) of grooves (32a, 32b, 32c) and of cuts (26a, 26b) in the tread strip (12), the network (44, 45) of strips (46a, 46b, 46c) and of blades (52a, 52b) comprising at least one node (34, 35) between two strips (46a, 46b, 46c), each strip (46a, 46b, 46c) of the network (44, 45) overmoulding at least the edge (56, 58) of a blade (52a, 52b).

2. Lining (36) according to Claim 1, in which the network (44, 45) of strips (46a, 46b, 46c) comprises at least one circumferential strip (46a) for moulding a circumferential groove (32a) in the tread strip (12).

3. Lining (36) according to either one of the preceding claims, in which the network (44, 45) of strips (46a, 46b, 46c) comprises at least one transverse strip (46b) for moulding a transverse groove (32b) in the tread strip (12).

4. Lining (36) according to any one of the preceding claims, in which the network (44, 45) of strips (46a, 46b, 46c) comprises at least one radial strip (46c) for moulding a radial groove (32c) in the tread strip (12).

5. Mould for vulcanizing a green tyre preform (10), comprising at least one moulding lining (36), **characterized in that** the moulding lining (36) is according to any one of the preceding claims.

6. Method of manufacturing a so-called final lining (36) for moulding part of a tread strip (12) of a tyre (10), **characterized in that** the final lining (36) is manufactured by overmoulding edges (56, 58) of a network of blades (52a, 52b) for moulding a corresponding network of cuts (26a, 26b) in the tread strip (12) with a network of strips (46a, 46b, 46c) for moulding a corresponding network of grooves (32a, 32b, 32c) in the tread strip (12).

7. Method according to Claim 6, in which each blade (52a, 52b) is made of steel and each strip (46a, 46b, 46c) is made of aluminium.

8. Method according to Claim 6 or 7, in which the final lining (36) is moulded on a die (80) known as the final die, the final die (80) comprising:
- a network of grooves (82a, 82b, 82c) for moulding the network of strips (46a, 46b, 46c) of the final lining (36), and
- the network of blades (52a, 52b) the edges (56-58) of which open into the network of grooves (82a, 82b, 82c) for moulding the network of strips of the final lining so that the said edges (56-58) of the network of blades (52a, 52b) can be overmoulded with the network of strips (46a, 46b, 46c) of the final lining (36).

9. Method according to Claim 8, in which the final die (80) is made of a material which is inert towards the material in which the network of strips (46a, 46b, 46c) of the final lining (36) is moulded, for example in a material containing sand and/or plaster.

10. Method according to Claim 8 or 9, in which, prior to moulding the final lining (36) on the final die (80), the final die (80) is manufactured as follows:
- an intermediate lining (75) is manufactured, and
- the final die (80) is moulded on the intermediate lining (75).

11. Method according to Claim 10, in which the intermediate lining (75) comprises:
- at least one removable intermediate network (67, 68) moulded in a mould counterpart (66), the said network (67, 68) comprising a network of intermediate strips (74a, 74b, 74c) for moulding the network of grooves (82a, 82b, 82c) of the final die (80) overmoulded over the edges (56, 58) of the network of blades (52, 52b), and
- a base (76) comprising at least one housing (78a, 78b) for positioning the intermediate removable network (67, 68).

12. Method according to Claim 11, in which the network of intermediate strips (74a, 74b, 74c) of the intermediate removable network (67, 68) is mounted in a material that can be melted, for example wax.

13. Method according to Claim 11 or 12, in which the mould counterpart (66) comprises:
- a network of intermediate grooves (72a, 72b, 72c) for moulding the network of intermediate strips (74a, 74b, 74c) of the intermediate removable network (67, 68), and
- housings (70a, 70b, 70c) for positioning of the network of blades (52a, 52b) of the final lining (36), each housing (70a, 70b, 70c) opening into an intermediate groove (72a, 72b, 72c).

14. Method according to any one of Claims 11 to 13, in which:
- after the final die (80) has been moulded on the intermediate lining (75), and
- before the final lining (36) is moulded on the final die (80),
each intermediate strip (74a, 74b, 74c) is melted.

15. Mould counterpart (66) for moulding a network of strips and of blades of a mould lining for moulding part of a tread strip of a tyre, **characterized in that** the mould counterpart comprises:
- a network of grooves for moulding a network of strips, and
- housings for positioning the network of blades (52a, 52b) with respect to the network of grooves and opening into at least one of the grooves.

16. Method of vulcanizing a green tyre preform (10), **characterized in that** the green preform is vulcanized in a mould according to Claim 5.

17. Tyre (10), **characterized in that** it is obtained by vulcanizing a green preform in a mould according to Claim 5.
